(19) Europäisches Patentamt / European Patent Office / Office européen des brevets

(11) **EP 4 461 506 A1**

(12) **EUROPEAN PATENT APPLICATION**
published in accordance with Art. 153(4) EPC

(43) Date of publication:
**13.11.2024 Bulletin 2024/46**

(21) Application number: 22918814.9

(22) Date of filing: **20.12.2022**

(51) International Patent Classification (IPC):
**B29C 48/285** (2019.01)    **B29B 7/24** (2006.01)
**B29C 31/10** (2006.01)    **B29C 48/08** (2019.01)
**B29C 48/305** (2019.01)    **B29C 48/88** (2019.01)
**B29C 55/12** (2006.01)    **C08J 5/18** (2006.01)
**C08L 77/02** (2006.01)    **B29K 77/00** (2006.01)
**B29L 7/00** (2006.01)

(52) Cooperative Patent Classification (CPC):
**B29B 7/24; B29C 31/10; B29C 48/08;
B29C 48/285; B29C 48/305; B29C 48/88;
B29C 55/12; C08J 5/18; C08L 77/02**

(86) International application number:
**PCT/JP2022/046839**

(87) International publication number:
**WO 2023/132230 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.01.2022 JP 2022000644**

(71) Applicant: **Toyobo Co., Ltd.**
**Kita-ku**
**Osaka-shi, Osaka 530-0001 (JP)**

(72) Inventors:
• **TORII, Ayame**
**Inuyama-shi**
**Aichi 484-8508 (JP)**
• **GOTO, Takamichi**
**Inuyama-shi**
**Aichi 484-8508 (JP)**

(74) Representative: **Vossius & Partner**
**Patentanwälte Rechtsanwälte mbB**
**Siebertstrasse 3**
**81675 München (DE)**

(54) **BIAXIALLY STRETCHED POLYAMIDE FILM ROLL**

(57) To provide a carbon-neutral biaxially stretched polyamide film containing a raw material derived from biomass and having high heat-resistance, impact resistance, and folding pinhole resistance. To provide a biaxially stretched polyamide film roll having decreased variability in a degree of biomass in the mechanical (longitudinal) direction. A biaxially stretched polyamide film roll comprising a biaxially stretched polyamide film containing 70% by mass to 99% by mass of polyamide 6 resin and 1% by mass to 30% by mass of a polyamide resin in which at least a part of a raw material is derived from biomass, wherein the film roll has a winding length of from 1,000 m to 60,000 m, a width of from 400 mm to 3,000 mm, and variability in a degree of biomass of 15% or less based on radiocarbon $^{14}C$ measurement of a biaxially stretched polyamide film sample taken from a surface to a core of the film roll at an interval of 1000 m in an MD direction.

EP 4 461 506 A1

[Fig.1]

**Description**

TECHNICAL FIELD

The present invention relates to a carbon-neutral biaxially stretched polyamide film roll suitable for use in a packaging film, using a raw material derived from biomass, and a method for producing the same.

BACKGROUND ART

Biaxially stretched films consisting of an aliphatic polyamide represented by polyamide 6 have high impact resistance and folding pinhole resistance, hence, the biaxially stretched films have been widely used as packaging materials for various purposes.

The use of biomass as an alternative raw material to fossil fuel has recently attracted attention in the field of materials for the establishment of a "Sound Material-Cycle Society". Biomass is an organic compound photosynthesized from carbon dioxide and water and is a so-called carbon-neutral raw material which is broken down into carbon dioxide and water again when used. The term "carbon-neutral" denotes substantial net zero emission of carbon dioxide, a greenhouse gas, by balancing the levels of carbon dioxide emitted and absorbed in the atmosphere. The practical application of biomass plastic made from a raw material derived from biomass has been rapidly advancing, and a biaxially stretched polyamide film including polyamide 6 resin and a polyamide resin in which at least a part of a raw material is derived from biomass is suggested (Patent Document 1).

CITATION LIST

PATENT DOCUMENT

Patent Document 1: WO 2020/170714

SUMMARY OF THE INVENTION

PROBLEMS TO BE SOLVED BY THE INVENTION

Polyamide 6 resin and a polyamide resin in which at least a part of a raw material is derived from biomass have different specific gravity and resin chip shapes with each other in some cases. Segregation of raw material resin chips causes variability in a raw material proportion during mixing and extrusion steps, resulting in difference in a degree of biomass in the MD direction (Machine Direction) of a film. Due to the reason, in some cases, it has been challenging to achieve a homogeneous degree of biomass in the MD direction of a long-length rolled product.

It is an object of the present inventio to provide a film roll comprising a biaxially stretched polyamide film containing a raw material derived from biomass, and having reduced variability in a degree of biomass in the MD direction, even in a long winding length film roll, and a method for producing the same.

SOLUTION TO THE PROBLEMS

The present invention has the following features.

[1] A biaxially stretched polyamide film roll comprising: a biaxially stretched polyamide film containing 70% by mass to 99% by mass of polyamide 6 resin; and 1% by mass to 30% by mass of a polyamide resin in which at least a part of a raw material is derived from biomass, wherein the film roll has a winding length of from 1,000 m to 60,000 m, a width of from 400 mm to 3,000 mm, and variability in a degree of biomass represented by the following Equation (1) of 15% or less:

$$\text{Equation (1): variability in a degree of biomass (\%)} = \{(X_{max} - X_{min})/X_{ave}\} \times 100$$

wherein $X_{max}$ represents a maximum value, $X_{min}$ represents a minimum value, and $X_{ave}$ represents an average value of a degree of biomass based on a radiocarbon $^{14}$C measurement of a biaxially stretched polyamide film sample taken from a surface to a core of the film roll at an interval of 1000 m in an MD direction.

[2] The biaxially stretched polyamide film roll according to [1], wherein the film roll has the degree of biomass of from 1% to 30%.

[3] The biaxially stretched polyamide film roll according to [1] or [2], wherein the polyamide resin in which at least a part of a raw material is derived from biomass is at least one polyamide resin selected from the group consisting of polyamide 11, polyamide 410, polyamide 610, and polyamide 1010.

[4] The biaxially stretched polyamide film roll according to any one of [1] to [3], wherein the film roll has a thickness accuracy of 30% or less in both the MD direction and a TD (Transverse direction) direction of the film roll.

[5] A laminated film roll comprising a sealant film and the biaxially stretched polyamide film roll according to any one of [1] to [4], wherein the sealant film is laminated on the biaxially stretched polyamide film of the film roll.

[6] A method for producing a biaxially stretched polyamide film roll, the method comprising: feeding a raw material resin to an extruder and mixing the raw material, melt-extruding the mixed raw material resin from the extruder into a sheet shape, and cooling the sheet on a cast drum to form an unstretched sheet; stretching the unstretched sheet in an MD direction and a TD direction; and heat setting the stretched sheet, wherein a raw material resin chip of polyamide 6 is supplied to a first hopper, a raw material resin chip of a polyamide in which at least a part of a raw material is derived from biomass is supplied to a second hopper, and the raw material resin chip fed from the first hopper and the raw material resin chip fed from the second hopper are mixed directly above an extruder, and then the resulting raw material resin is melt-extruded from the extruder.

[7] The method for producing the biaxially stretched polyamide film roll according to [6], the method further comprising: supplying the raw material resin chip of the second hopper through plumbing disposed inside of the first hopper and having an outlet directly above the extruder, and mixing the raw material resin chip of the first hopper and the raw material resin chip of the second hopper.

ADVANTAGEOUS EFFECTS OF THE INVENTION

According to the present invention, a biaxially stretched polyamide film roll having reduced variability in a degree of biomass in the MD direction, even in a long winding length film roll, can be produced.

BRIEF DESCRIPTION OF DRAWING

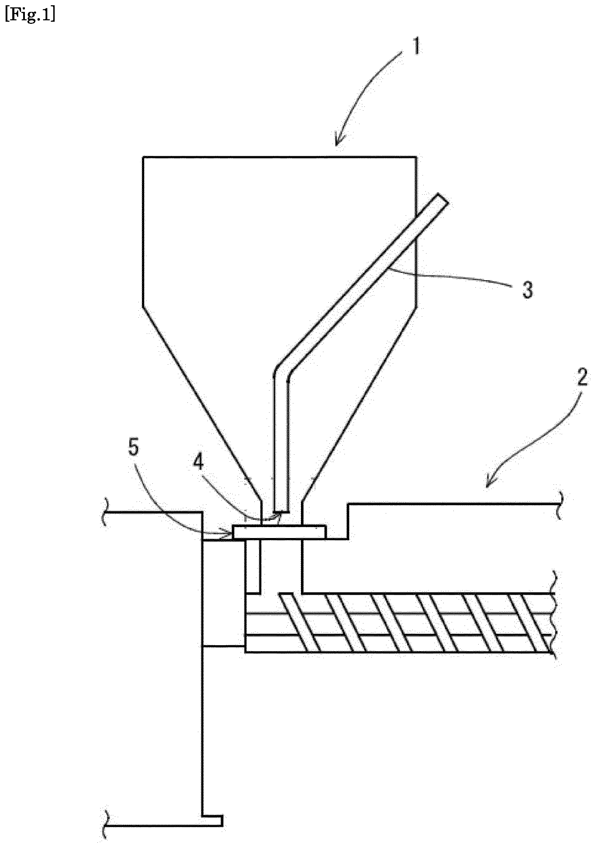

[Fig. 1] Fig. 1 is a schematic diagram illustrating an exemplary method for mixing two or more resins in a film roll production process.

DESCRIPTION OF EMBODIMENTS

A biaxially stretched polyamide film of the present invention contains 70% by mass to 99% by mass of polyamide 6 resin and 1% by mass to 30% by mass of a polyamide resin in which at least a part of a raw material is derived from biomass. By containing 70% by mass or more of polyamide 6 resin, the resulting film can have characteristics that are inherent in a biaxially stretched polyamide film made from polyamide 6 resin, such as high impact strength as mechanical strength and gas barrier properties, for example, to oxygen. In addition, by containing 1% by mass to 30% by mass of a polyamide resin in which at least a part of a raw material is derived from biomass, it attains the effect of reducing the impact on carbon dioxide emission into the atmosphere and the resulting film can have improved folding pinhole resistance and friction pinhole resistance.

<Polyamide 6>

The polyamide 6 used in the present invention is typically produced by ring-opening polymerization of ε-caprolactam. The polyamide 6 obtained by the ring-opening polymerization is typically treated with hot water to remove a lactam monomer, subsequently dried, and melt extruded from an extruder.

The polyamide 6 has a relative viscosity of preferably from 1.8 to 4.5, and more preferably from 2.6 to 3.2. A relative viscosity smaller than 1.8 may result in insufficient impact strength of the film. A relative viscosity greater than 4.5 may increase a load on an extruder, making it difficult to obtain an unstretched film.

The biaxially stretched polyamide film of the present invention may contain polyamide 6 chemically recycled from waste polyamide 6 products including waste plastic products, waste tire rubbers, textiles, and fishing nets, in addition to typical polyamide 6, which is polymerized from a monomer derived from fossil fuel. A method for producing polyamide 6 by chemically recycling waste polyamide 6 products includes, for example, the following method in which used polyamide products are collected, then depolymerized to give ε-caprolactam followed by purification of the resulting ε-caprolactam, and polyamide 6 is polymerized using the purified ε-caprolactam.

In addition, polyamide 6 obtained by mechanically recycling the waste materials generated in the production process of polyamide film can be used in combination. Mechanically recycled polyamide 6 is a pelletized raw material produced by melt extrusion and compression molding of, for example, a substandard film, which is unable to be shipped, and waste, such as cut-offs, both generated in the production process of biaxially stretched polyamide film.

<Polyamide resin in which at least a part of a raw material is derived from biomass>

Examples of the polyamide resin in which at least a part of a raw material is derived from biomass used in the present invention include polyamide 11, polyamide 410, polyamide 610, polyamide 1010, polyamide MXD10, and a polyamide 11/6T copolymer resin.

Polyamide 11 is a polyamide resin having structure in which monomers each having 11 carbon atoms are linked by amide bonds. Polyamide 11 is typically obtained from a monomer of amino undecanoic acid or undecane lactam. Since amino undecanoic acid is a monomer obtained from castor oil, amino undecanoic acid is preferred from the viewpoint of carbon neutrality. The amount of a constitutional unit derived from a monomer having 11 carbon atoms in polyamide 11 is preferably 50 mol% or more, further preferably 80 mol% or more, and may be 100 mol% based on the total constitutional units of polyamide 11. Polyamide 11 is typically produced by ring-opening polymerization of undecane lactam described above. Polyamide 11 obtained by the ring-opening polymerization is typically treated with hot water to remove a lactam monomer, subsequently dried, and melt extruded from an extruder. Polyamide 11 has a relative viscosity of preferably from 1.8 to 4.5, and more preferably from 2.4 to 3.2.

Polyamide 410 is a polyamide resin having structure in which a monomer having four carbon atoms and a diamine having 10 carbon atoms are copolymerized. Polyamide 410 is typically produced from sebacic acid and tetramethylethylenediamine. Sebacic acid produced from castor oil, a plant oil, is preferred from the viewpoint of the environment, especially from the viewpoint of carbon neutrality.

Polyamide 610 is a polyamide resin having structure in which a diamine having six carbon atoms and a dicarboxylic acid having 10 carbon atoms are polymerized. Polyamide 610 is typically produced from hexamethylenediamine and sebacic acid. Since sebacic acid is a monomer obtained from castor oil, sebacic acid is preferred from the viewpoint of carbon neutrality. The total amount of a constitutional unit derived from a monomer having six carbon atoms and a constitutional unit derived from a monomer having 10 carbon atoms in polyamide 610 (PA610) is preferably 50 mol% or more, further preferably 80 mol% or more, and may be 100 mol% based on the total constitutional units of polyamide 610.

Polyamide 1010 is a polyamide resin having structure in which a diamine having 10 carbon atoms and a dicarboxylic acid having 10 carbon atoms are polymerized. Polyamide 1010 is typically produced from 1,10-decanediamine (decamethylenediamine) and sebacic acid. Since decamethylenediamine and sebacic acid are monomers obtained from castor oil, decamethylenediamine and sebacic acid are preferred from the viewpoint of carbon neutrality. The total amount of a constitutional unit derived from a diamine having 10 carbon atoms and a constitutional unit derived from a dicarboxylic acid having 10 carbon atoms in polyamide 1010 (PA1010) is preferably 50 mol% or more, further preferably 80 mol% or more, and may be 100 mol% based on the total constitutional units of polyamide 1010.

In the biaxially stretched polyamide film of the present invention, the lower limit of the content of the polyamide resin in which at least a part of a raw material is derived from biomass is not particularly limited. The lower limit is preferably 1% by mass, and more preferably 3% by mass or more. The upper limit of the content is preferably 30% by mass, and more preferably 20% by mass. When the content of the polyamide resin in which at least a part of a raw material is derived from biomass is more than 30% by mass, a molten film may become unstable during casting, making it difficult to obtain a homogeneous unstretched film.

<Auxiliary material and additive>

The biaxially stretched polyamide film of the present invention may contain an auxiliary thermoplastic resin and additives such as a lubricant, a heat stabilizer, an antioxidant, an antistatic agent, an antifogging agent, a UV absorber, a dye, and a pigment, if needed.

<Auxiliary thermoplastic resin>

The biaxially stretched polyamide film of the present invention may further contain an auxiliary thermoplastic resin in addition to the above polyamide 6 and the polyamide resin in which at least a part of a raw material is derived from biomass as long as the purpose of the present invention is not impaired. Examples of the auxiliary thermoplastic resin include polyamide resins such as polyamide 12 resin, polyamide 66 resin, polyamide 6/12 copolymer resin, polyamide 6/66 copolymer resin, and polyamide MXD6 resin. The film may contain a thermoplastic resin other than polyamide resins, such as polyester polymers including polyethylene terephthalate, polybutylene terephthalate, and polyethylene-2,6-naphthalate, and polyolefin polymers including polyethylene and polypropylene, if needed. Raw materials of these thermoplastic resins are preferably derived from biomass to decrease the effect on the increase and decrease of carbon dioxide levels on the earth and thus to decrease environmental load.

<Lubricant>

The biaxially stretched polyamide film of the present invention preferably contains a lubricant of a fine particle or an organic lubricant such as a fatty acid amide to have increased handleability by improving slipperiness. The fine particle may be appropriately selected and used from fine particles including inorganic fine particles of silica, kaolin, and zeolite, and polymer organic fine particles of acrylate and polystyrene. A silica fine particle is preferred to achieve transparency and slipperiness. The fine particle has an average particle size of preferably from 0.5 $\mu$m to 5.0 $\mu$m, and more preferably from 1.0 $\mu$m to 3.0 $\mu$m.

The biaxially stretched polyamide film of the present invention may contain a fatty acid amide and/or a fatty acid bisamide to improve slipperiness. Examples of the fatty acid amide and/or the fatty acid bisamide include erucamide, stearamide, ethylenebisstearic acid amide, ethylenebisbehenic acid amide, and ethylenebisoleic acid amide. The content of the fatty acid amide and/or the fatty acid bisamide is preferably from 0.01% by mass to 0.40% by mass, and further preferably from 0.05% by mass to 0.30% by mass.

The biaxially stretched polyamide film of the present invention may contain a polyamide resin exemplified by polyamide MXD6 resin, polyamide 12 resin, polyamide 66 resin, polyamide 6/12 copolymer resin, and polyamide 6/66 copolymer resin to improve slipperiness.

<Antioxidant>

The biaxially stretched polyamide film of the present invention may contain an antioxidant. The antioxidant is preferably a phenolic antioxidant, and the phenolic antioxidant is preferably a totally hindered phenolic compound or a partially hindered phenolic compound. Examples of such compounds include tetrakis-[methylene-3-(3',5'-di-t-butyl-4'-hydroxyphenyl) propionate] methane, stearyl-$\beta$-(3,5-di-tert-butyl-4-hydroxyphenyl)propionate, and 3,9-bis[1,1-dimethyl-2-[B-(3-t-butyl-4-hydroxy-5-methylphenyl)propionyloxy]ethyl]2,4,8,10-tetraoxaspiro [5, 5]undecane. The phenolic antioxidant enables the production of the biaxially stretched polyamide film with high operability.

The thickness of the biaxially stretched polyamide film of the present invention is not particularly limited, and the film having a thickness of typically 100 $\mu$m or less, generally from 5 $\mu$m to 50 $\mu$m, and particularly from 8 $\mu$m to 30 $\mu$m is used in an application for a packaging material.

The biaxially stretched polyamide film of the present invention has a heat shrinkage rate in both the MD direction and the TD direction of preferably from 0.6% to 3.0%, and more preferably from 0.6% to 2.5% after treatment at a testing temperature of 160°C and a heating time of 10 minutes. The heat shrinkage rate of 3.0% or less can prevent the film from curling and shrinking when heat is applied in the subsequent lamination and printing processes. Although the heat shrinkage rate can be controlled to less than 0.6%, such a heat shrinkage rate may cause mechanical brittleness and deteriorated productivity.

The biaxially stretched polyamide film of the present invention preferably has an impact strength of 0.7 J/15$\mu$m or more, and more preferably 0.9 J/15$\mu$m or more. The upper limit of the impact strength is not particularly limited. The upper may be 2.0 J/15$\mu$m or less, or 1.5 J/15$\mu$m or less.

The biaxially stretched polyamide film of the present invention has a haze value of preferably 10% or less, more preferably 7% or less, and further preferably 5% or less. The film with a smaller haze value can have high transparency and gloss, enabling neat printing and an increase in commercial value when used for a packaging bag.

The biaxially stretched polyamide film of the present invention has a dynamic coefficient of friction of preferably 1.0 or less, more preferably 0.7 or less, and further preferably 0.5 or less. The film with a smaller dynamic coefficient of friction can have improved slipperiness, enabling facilitated handleability of the film. A film with too small dynamic coefficient of friction is too slippery to be handled, hence, the biaxially stretched polyamide film of the present invention preferably has a dynamic coefficient of friction of 0.15 or more.

The biaxially stretched polyamide film roll of the present invention preferably has a degree of biomass, a content of carbon derived from biomass which is measured by radiocarbon $^{14}$C according to the method described in ASTM D6866-18, of from 1% to 30% with respect to the total carbon in the polyamide film. A certain amount (105.5 pMC) of $^{14}$C is contained in atmospheric carbon dioxide, and it is known that, for example, corn, a plant that absorbs carbon dioxide from the atmosphere to grow, contains approximately 105.5 pMC of $^{14}$C. However, it is also known that fossil fuel contains almost no $^{14}$C. Accordingly, a content of carbon derived from biomass can be calculated by measuring the content of $^{14}$C in the total carbon of the film.

The biaxially stretched polyamide film roll of the present invention has variability in a degree of biomass represented by the following Equation (1) of preferably 15% or less, further preferably 13% or less, and most preferably 10% or less, when a biaxially stretched polyamide film sample is taken from a surface to a core of the film roll at an interval of 1000 m in an MD direction and Xmax represents a maximum value, Xmin represents a minimum value, and Xave represents an average value of a degree of biomass based on a radiocarbon $^{14}$C measurement of the film sample.

$$\text{Equation (1): variability in degree of biomass in MD direction (\%) =}$$
$$\{(\text{Xmax} - \text{Xmin})/\text{Xave}\} \times 100$$

The biaxially stretched polyamide film roll of the present invention preferably has the upper limit of thickness accuracy in both the MD direction and the TD direction of the film roll of preferably 30% or less, further preferably 25% or less, and most preferably 20% or less. The thickness accuracy of 30% or less allows the obtained film roll to have reduced appearance defects, wrinkles, and weaving due to skewing of the film.

[Method for producing polyamide film]

A method for producing the polyamide film roll of the present invention includes: feeding a polyamide 6 resin chip and a chip of polyamide resin in which at least a part of a raw material is derived from biomass to an extruder equipped with a hopper and mixing the raw materials; melt-extruding the mixed polyamide resin from the extruder into a sheet shape; cooling the sheet on a cast drum to form an unstretched sheet; stretching the unstretched sheet in the MD direction; preheating the film stretched in the MD direction to a temperature that allows subsequent stretching in the TD direction; stretching in the TD direction, a direction orthogonal to the MD direction; heat setting the polyamide film stretched in the MD direction and the TD direction by heating and crystallization; thermal relaxing for removal of residual strain by relieving tension from the heat-set polyamide film in the width direction; and cooling the polyamide film after thermal relaxation.

In a preferred method for mixing the polyamide 6 resin chip and the chip of polyamide resin in which at least a part of a raw material is derived from biomass, a raw material chip of polyamide 6 is supplied to the first hopper and a raw material chip of polyamide in which at least a part of a raw material is derived from biomass is supplied to the second hopper, then the raw material chip fed from the first hopper and the raw material chip fed from the second hopper are mixed directly above an extruder, and the resulting raw material resin is melt extruded from the extruder.

In a specific exemplary embodiment, the raw material resin chip of the second hopper is supplied through plumbing disposed inside of the first hopper having an outlet directly above the extruder (hereinafter merely "an inner pipe" in some cases), and the raw material resin chip of the first hopper and the raw material resin chip of the second hopper are mixed. Fig. 1 is a schematic diagram illustrating the mixing procedure including an exemplary relationship between "extruder 2 provided with hopper 1" and "inner pipe 3". As shown in Fig. 1, a resin other than polyamide 6 resin chip as a main raw material of the polyamide film of the present invention is supplied through inner pipe 3, and polyamide 6 resin chip is supplied from the top portion of hopper 1. Inner pipe 3 has outlet 4 disposed directly above raw material resin supply port 5 of extruder 2, therefore, the mixing ratio of raw materials can be kept constant.

Mixing of the polyamide 6 resin chip and the chip of polyamide resin in which at least a part of a raw material is derived from biomass in a single hopper may cause segregation of the raw materials in the hopper due to differences in specific gravity and shapes of the resin chips, and the risk of the segregation may be increased, in particular, at the part where the inner wall of the hopper is not vertical. The part where the inner wall of the hopper is not vertical corresponds to the part where the inner wall tapers. Even if resin chips have different specific gravity and shapes, segregation of raw materials can be reduced by directly supplying a resin other than polyamide 6 resin chip through an inner pipe to the position that is inside of the hopper and directly above the extruder, and stable production of the polyamide film roll can be achieved.

The raw material resin is melt-extruded from an extruder, then extruded from a T-die into a film shape, and cast onto a cooling roll for cooling, to form an unstretched film. The melting temperature of the resin is preferably from 220°C to 350°C. The melting temperature lower than the range may cause an unmelted material, resulting in defects such as poor appearance. The melting temperature higher than the range may cause deterioration of the resin, resulting in lowered molecular weight and degraded appearance. The temperature of T-die is preferably from 250°C to 350°C.

The temperature of the cooling roll is preferably from -30°C to 80°C, and further preferably from 0°C to 50°C. The unstretched film can be obtained from a film-shaped molten resin extruded from a T-die by casting it onto a rotary cooling drum, for example, by a method using an air-knife or a method using electrostatic adhesion by applying a static charge, followed by cooling on the cooling drum. In particular, the latter method is preferred.

The unstretched film can be stretched either of a simultaneous biaxial stretching method or a sequential biaxial stretching method. In either method, stretching in the MD direction can be conducted by single-stage stretching or multi-stage stretching including two-stage stretching. As described later, multi-stage stretching including two-stage stretching in the MD direction is preferred to single-stage stretching, because the stretching method enables isotropy, i.e., homogeneity of physical properties between the MD direction and the TD direction of the film. When a sequential biaxial stretching method is employed, stretching in the MD direction is preferably conducted by roll stretching.

The lower limit of the stretching temperature in the MD direction is preferably 50°C, more preferably 55°C, and further preferably 60°C. The upper limit of the stretching temperature in the MD direction is preferably 120°C, more preferably 115°C, and further preferably 110°C.

The lower limit of the stretching ratio in the MD direction is preferably 2.2 times, more preferably 2.5 times, and further preferably 2.8 times. The upper limit of the stretching ratio in the MD direction is preferably 5.0 times, more preferably 4.5 times, and most preferably 4.0 times. In the multi-stage stretching in the MD direction, "the stretching ratio in the MD direction" as described above means a total stretching ratio as a product of stretching ratio in each stage.

Stretching in each stage of the multi-stage stretching in the MD direction can be conducted under conditions as described above. The stretching ratio in each stage is preferably controlled so that the total stretching ratio in the MD direction as a product of stretching ratio in each stage becomes 5.0 or less. For example, in the case of two-stage stretching, the stretching ratio in the first stage is preferably from 1.5 times to 2.1 times, and the stretching ratio in the second stage is preferably from 1.5 times to 1.8 times.

The film that has already been stretched in the MD direction is further stretched in the TD direction using a tenter, then heat set, and relaxed (relaxation treatment in other words). The lower limit of the stretching temperature in the TD direction is preferably 50°C, more preferably 55°C, and further preferably 60°C. The upper limit of the stretching temperature in the TD direction is preferably 190°C, more preferably 185°C, and further preferably 180°C.

The lower limit of the stretching ratio in the TD direction is preferably 2.8 times, more preferably 3.2 times, further preferably 3.5 times, and particularly preferably 3.8 times. The upper limit of the stretching ratio in the TD direction is preferably 5.5 times, more preferably 5.0 times, further preferably 4.7 times, particularly preferably 4.5 times, and most preferably 4.3 times. In the multi-stage stretching in the TD direction, "the stretching ratio in the TD direction" as described above means a total stretching ratio as a product of stretching ratio in each stage.

The lower limit of the heat setting temperature is preferably 210°C and more preferably 212°C. The upper limit of the heat setting temperature is preferably 220°C, and more preferably 218°C.

Heat setting time is preferably from 0.5 seconds to 20 seconds, and more preferably from 1 second to 15 seconds. The heat setting time can be determined to appropriate time for balancing the heat setting temperature and a wind speed in a heat setting zone.

The relaxing treatment conducted after heat setting is effective for controlling the rate of heat shrinkage. A temperature for relaxing treatment is a temperature in a range of from "a heat setting temperature" to "a glass transition temperature" Tg of a resin, and preferably a temperature in a range of from [a heat setting temperature -10°C] to [Tg + 10°C].

In the relaxing treatment, the lower limit of a relaxing rate is preferably 0.5%, and more preferably 1%. The upper limit of a relaxing rate is preferably 20%, more preferably 15%, and further preferably 10%.

Further, heat treatment and humidity conditioning treatment can be conducted to improve dimensional stability according to the purposes of use. In addition, corona treatment, coating treatment, flame treatment, a process of printing, or vapor deposition of a metal or an inorganic oxide can be conducted to improve adhesiveness of the film surface. A film formed by vapor deposition is preferably a vapor-deposited film of an aluminium, a vapor-deposited film of an aluminium oxide, a silicon oxide, or mixtures thereof. Further, a protective layer can be formed upon the vapor-deposited film to improve barrier properties to oxygen.

[Laminated film roll with heat sealability]

In case where the polyamide film roll of the present invention is used for a packaging material, a sealant film having heat sealability is preferably laminated on the biaxially stretched polyamide film of the film roll. Between the biaxially stretched polyamide film and the sealant film, an adhesive layer, a printing layer, or a metal layer can also be provided to form a laminated film roll. The method for lamination includes known methods such as a dry lamination method and an extrusion lamination method, and either method can be employed. The followings are specific examples of layer configuration.

Specific examples of the layer configuration of the laminated film roll of the present invention include: ONY/adhesive/CPP, ONY/adhesive/Al/adhesive/CPP, PET/adhesive/ONY/adhesive/CPP, PET/adhesive/ONY/adhesive/Al/adhesive/CPP, PET/adhesive/Al/adhesive/ONY/adhesive/CPP, ONY/adhesive/PET/adhesive/CPP, ONY/PE/CPP, ONY/adhesive/EVOH/adhesive/CPP, ONY/adhesive/Al-deposited PET/adhesive/CPP, CPP/adhesive/ONY/adhesive/LLDPE, ONY/adhesive/Al-deposited CPP.

The abbreviations used to represent the above configurations are as follows.

/: A boundary between layers
ONY: Biaxially stretched polyamide film
PET: Stretched polyethylene terephthalate film
LLDPE: Unstretched linear low-density polyethylene film
CPP: Unstretched polypropylene film

PE: Extruded laminate or unstretched low-density polyethylene film
Al: Aluminum foil
EVOH: Ethylene-vinyl alcohol copolymer resin
Adhesive: Adhesive layer for bonding films
Al-deposited: Deposited by aluminum

EXAMPLES

Films were evaluated in accordance with the following measurement methods. The measurement was conducted in a measurement room, under the environment at 23°C and 65% relative humidity, unless otherwise described.

(1) Film thickness

[Thickness accuracy of film in MD direction]

A film test piece was cut out from the middle portion of the film roll, with respect to the width direction of the film roll, to have a width of 5 cm in the MD direction and a length of 100 cm. The film test piece was measured using a thickness gauge (dial gauge, manufactured by TESTER SANGYO CO., LTD.) at 20 points at an interval of 5 cm. The thickness accuracy (Tv) was determined according to the following Equation (2), from the maximum thickness "Tmax", the minimum thickness "Tmin", and the average thickness "Tave".

$$\text{Equation (2): Tv in MD direction (\%)} = \{(\text{Tmax} - \text{Tmin})/\text{Tave}\} \times 100$$

[Thickness accuracy of film in TD direction]

A film test piece was cut out to have a width of 5 cm in the TD direction of the film roll. The film test piece was measured using a thickness gauge (dial gauge, manufactured by TESTER SANGYO CO., LTD.) at points at an interval of 5 cm. The thickness accuracy (Tv) was determined according to the following Equation (3), from the maximum thickness "Tmax", the minimum thickness "Tmin", and the average thickness "Tave".

$$\text{Equation (3): Tv in TD direction (\%)} = \{(\text{Tmax} - \text{Tmin})/\text{Tave}\} \times 100$$

(2) Degree of biomass

The degree of biomass (%) of the film was determined based on a radiocarbon $^{14}$C measurement as specified in ASTM D6866-18 Method B (AMS).

(3) Heat shrinkage rate

The heat shrinkage rate (%) of the film was measured for both the MD and the TD directions according to the Equation (4) below, following the dimensional change testing method described in JIS C2318, except for the testing temperature being set to 160°C and the heating time to 10 minutes.

$$\text{Equation (4): heat shrinkage rate (\%)} = [(\text{length before treatment} - \text{length after treatment})/\text{length before treatment}] \times 100$$

(4) Variability in degree of biomass

Test pieces were prepared by sampling from the surface to the core of the polyamide film roll at an interval of 1000 m in the MD direction. The degree of biomass of each of the test pieces was measured based on radiocarbon $^{14}$C measurement.

The variability in a degree of biomass represented by the following Equation (1) was calculated from the maximum value Xmax (%), the minimum value Xmin (%), and the average value Xave (%) of the obtained degree of biomass.

$$\text{Equation (1): variability in degree of biomass (\%)} = \{(X_{max} - X_{min})/X_{ave}\} \times 100$$

The followings are methods for producing polyamide films used in Examples and Comparative Examples. Physical properties of the polyamide films are presented in Table 1.

<Example 1>

An apparatus including an extruder and a co-extruding T-die having a width of 380 mm was used. A molten resin was extruded from the T-die into a film shape, and the film was cast and electrostatically adhered onto a cooling roll controlled to 20°C to form an unstretched film having a thickness of 200 μm. Here, resin composition B was supplied through an inner pipe as shown in Fig. 1 to mix with resin composition A directly above the extruder.

Resin composition A: a resin composition containing 97 parts by mass of polyamide 6 (relative viscosity: 2.8, melting point: 220°C, manufactured by TOYOBO CO., LTD.), 0.45 parts by mass of porous silica fine particles (average particle size: 2.0 μm, pore volume: 1.6 ml/g, manufactured by FUJI SILYSIA CHEMICAL LTD.), and 0.15 parts by mass of a fatty acid bisamide (ethylene bissteraric acid amide, manufactured by KYOEISHA CHEMICAL Co.,LTD.).

Resin composition B: 3.0 parts by mass of polyamide 11 (relative viscosity: 2.5, melting point: 186°C, manufactured by Arkema) as a polyamide resin in which at least a part of a raw material is derived from biomass.

The obtained unstretched film was guided to a roll type stretching machine. Using a difference in circumferential speeds of rolls, the unstretched film was initially stretched 1.73 times at 80°C in the MD direction and was further stretched 1.85 times at 70°C in the MD direction. The resulting uniaxially stretched film was continuously guided to a tenter-type stretching machine, then preheated at 110°C, and stretched 1.2 times at 120°C, 1.7 times at 130°C, and 2.0 times at 160°C in the TD direction. Subsequently, the resulting biaxially stretched film was subjected to heat setting at 218°C, then relaxed at 218°C by 7%, and the film's surface to be dry-laminated with a linear low-density polyethylene film was subjected to corona discharge treatment to obtain a jumbo roll of the biaxially stretched polyamide film. The obtained jumbo roll was slit to produce a biaxially stretched polyamide film roll with a width of 1,000 mm and a length of 4,000 m. Evaluation results of the obtained biaxially stretched polyamide film roll are presented in Table 1.

<Examples 2 to 9>

Biaxially stretched polyamide film rolls were obtained in the same manner as in Example 1 with the exception that raw material resin compositions and film forming conditions such as heat setting temperature were changed as shown in Table 1. Evaluation results of the obtained biaxially stretched polyamide film rolls are presented in Table 1.

<Comparative Example 1>

An apparatus including an extruder and a co-extruding T-die having a width of 380 mm was used. A molten resin was extruded from the T-die into a film shape, and the film was cast and electrostatically adhered onto a cooling roll controlled to 20°C to form an unstretched film having a thickness of 200 μm. Although the same resin composition A and the same resin composition B as in Example 1 were used, an inner pipe was not used for mixing of resin composition B with resin composition A. Alternatively, resin composition A and resin composition B were mixed at an upper portion of a hopper, and the resulting resin composition was supplied to the extruder. A biaxially stretched polyamide film roll was obtained under the same film forming conditions as in Example 1 with the exception that the method for mixing resin compositions was changed. Evaluation result of the obtained biaxially stretched polyamide film roll is presented in Table 2.

<Comparative Examples 2 to 9>

Biaxially stretched polyamide film rolls were obtained in the same manner as in Comparative Example 1 with the exception that raw material resin compositions and film forming conditions such as heat setting temperature were changed as shown in Table 2. Evaluation results of the obtained biaxially stretched polyamide film rolls are presented in Table 2.

The polyamide resins in which at least a part of a raw material is derived from a biomass used in Examples and Comparative Examples are the following polyamide 410, polyamide 610, and polyamide 1010.

Polyamide 410: (ECOPaXX Q150-E, melting point: 250°C, manufactured by DSM)
Polyamide 610: (RilsanS SMNO, melting point: 222°C, manufactured by Arkema)
Polyamide 1010: (RilsanT TMNO, melting point: 202°C, manufactured by Arkema)

[Table 1A]

| | | | | Example 1 | Example 2 | Example 3 | Example 4 | Example 5 |
|---|---|---|---|---|---|---|---|---|
| Composition | | Polyamide 6 | parts by mass | 97 | 95 | 90 | 86 | 75 |
| | | Polyamide 11 | parts by mass | 3 | 5 | 10 | 15 | 26 |
| | | Polyamide 410 | parts by mass | - | - | - | - | - |
| | | Polyamide 610 | parts by mass | - | - | - | - | - |
| | | Polyamide 1010 | parts by mass | - | - | - | - | - |
| | | Fine particle | parts by mass | 0.45 | 0.45 | 0.45 | 0.45 | 0.45 |
| | | Fatty acid amide | parts by mass | 0.15 | 0.15 | 0.15 | 0.15 | 0.15 |
| Inner pipe | | | - | With inner pipe | With inner pipe | With inner pipe | With inner pipe | With inner pipe |
| Stretching temperature in MD | | | °C | 80 | 80 | 80 | 80 | 80 |
| Stretching ratio in MD | | | times | 3.2 | 3.2 | 3.2 | 3.2 | 3.2 |
| Stretching temperature in TD | | | °C | 130 | 130 | 130 | 130 | 130 |
| Stretching ratio in TD | | | times | 4.0 | 4.0 | 4.0 | 4.0 | 4.0 |
| Heat setting temperature in TD | | | °C | 218 | 218 | 218 | 218 | 218 |
| Relaxing temperature in TD | | | °C | 218 | 218 | 218 | 218 | 218 |
| Relaxing rate in TD | | | % | 7 | 7 | 7 | 7 | 7 |
| Thickness | | | μm | 15 | 15 | 15 | 16 | 16 |
| Thickness accuracy | | MD direction | % | 17 | 18 | 19 | 18 | 18 |
| | | TD direction | % | 17 | 18 | 17 | 17 | 17 |
| Degree of biomass | | Average value (Xave) | % | 2.7 | 4.5 | 9.0 | 13.5 | 22.5 |
| | | Maximum value (Xmax) | % | 2.8 | 4.7 | 9.3 | 13.7 | 22.9 |
| | | Minimum value (Xmin) | % | 2.6 | 4.3 | 8.7 | 13.2 | 22.1 |
| | | Variability | % | 8 | 9 | 7 | 4 | 4 |

(continued)

| | | | Example 1 | Example 2 | Example 3 | Example 4 | Example 5 |
|---|---|---|---|---|---|---|---|
| Heat shrinkage rate | MD direction | % | 0.9 | 1.0 | 0.9 | 1.1 | 1.2 |
| | TD direction | % | 0.9 | 1.0 | 1.1 | 1.3 | 1.3 |

[Table 1B

| | | | Example 6 | Example 7 | Example 8 | Example 9 |
|---|---|---|---|---|---|---|
| Composition | Polyamide 6 | parts by mass | 95 | 96 | 95 | 96 |
| | Polyamide 11 | parts by mass | 5 | - | - | - |
| | Polyamide 410 | parts by mass | - | 5 | - | - |
| | Polyamide 610 | parts by mass | - | - | 5 | - |
| | Polyamide 1010 | parts by mass | - | - | - | 5 |
| | Fine particle | parts by mass | 0.45 | 0.45 | 0.45 | 0.45 |
| | Fatty acid amide | parts by mass | 0.15 | 0.15 | 0.15 | 0.15 |
| Inner pipe | | - | With inner pipe | With inner pipe | With inner pipe | With inner pipe |
| Stretching temperature in MD | | °C | 80 | 80 | 80 | 80 |
| Stretching ratio in MD | | times | 3.0 | 3.2 | 3.2 | 3.2 |
| Stretching temperature in TD | | °C | 130 | 130 | 130 | 130 |
| Stretching ratio in TD | | times | 3.3 | 4.0 | 4.0 | 4.0 |
| Heat setting temperature in TD | | °C | 210 | 218 | 218 | 218 |
| Relaxing temperature in TD | | °C | 210 | 218 | 218 | 218 |
| Relaxing rate in TD | | % | 7 | 7 | 7 | 7 |
| Thickness | | μm | 15 | 15 | 15 | 15 |
| Thickness accuracy | MD direction | % | 18 | 18 | 17 | 18 |
| | TD direction | % | 17 | 18 | 16 | 17 |
| Degree of biomass | Average value (Xave) | % | 4.5 | 4.4 | 4.6 | 4.5 |
| | Maximum value (Xmax) | % | 4.7 | 4.6 | 4.8 | 4.7 |
| | Minimum value (Xmin) | % | 4.4 | 4.3 | 4.5 | 4.4 |
| | Variability | % | 7 | 7 | 6 | 7 |
| Heat shrinkage rate | MD direction | % | 1.6 | 1.2 | 1.3 | 1.4 |
| | TD direction | % | 0.9 | 1.4 | 1.5 | 1.5 |

[Table 2A]

| | | | Comparative Example 1 | Comparative Example 2 | Comparative Example 3 | Comparative Example 4 | Comparative Example 5 |
|---|---|---|---|---|---|---|---|
| Composition | Polyamide 6 | parts by mass | 97 | 95 | 90 | 85 | 75 |
| | Polyamide 11 | parts by mass | 3 | 6 | 10 | 15 | 26 |
| | Polyamide 410 | parts by mass | - | - | - | - | - |
| | Polyamide 610 | parts by mass | - | - | - | - | - |
| | Polyamide 1010 | parts by mass | - | - | - | - | - |
| | Fine particle | parts by mass | 0.45 | 0.45 | 0.45 | 0.45 | 0.45 |
| | Fatty acid amide | parts by mass | 0.15 | 0.15 | 0.15 | 0.15 | 0.15 |
| Inner pipe | | - | Without inner pipe | Without inner pipe | Without inner pipe | Without inner pipe | Without inner pipe |
| Stretching temperature in MD | | °C | 80 | 80 | 80 | 80 | 80 |
| Stretching ratio in MD | | times | 3.2 | 3.2 | 3.2 | 3.2 | 3.2 |
| Stretching temperature in TD | | °C | 130 | 130 | 130 | 130 | 130 |
| Stretching ratio in TD | | times | 4.0 | 4.0 | 4.0 | 4.0 | 4.0 |
| Heat setting temperature in TD | | °C | 218 | 218 | 218 | 218 | 218 |
| Relaxing temperature in TD | | °C | 218 | 218 | 218 | 218 | 218 |
| Relaxing rate in TD | | % | 7 | 7 | 7 | 7 | 7 |
| Thickness | | μm | 15 | 15 | 15 | 16 | 16 |
| Thickness accuracy | MD direction | % | 35 | 37 | 36 | 36 | 39 |
| | TD direction | % | 16 | 18 | 17 | 18 | 18 |

EP 4 461 506 A1

(continued)

| | | % | Comparative Example 1 | Comparative Example 2 | Comparative Example 3 | Comparative Example 4 | Comparative Example 5 |
|---|---|---|---|---|---|---|---|
| Degree of biomass | Average value (Xave) | % | 2.7 | 4.6 | 9.1 | 13.7 | 22.8 |
| | Maximum value (Xmax) | % | 3.2 | 5.6 | 10.1 | 15.1 | 25.5 |
| | Minimum value (Xmin) | % | 2.3 | 4.0 | 8.3 | 12.0 | 20.1 |
| | Variability | % | 34 | 35 | 20 | 23 | 24 |
| Heat shrinkage rate | MD direction | % | 0.9 | 1.0 | 0.9 | 1.1 | 1.2 |
| | TD direction | % | 0.8 | 1.1 | 1.1 | 1.0 | 1.3 |

[Table 2B]

| | | | Comparative Example 6 | Comparative Example 7 | Comparative Example 8 | Comparative Example 9 |
|---|---|---|---|---|---|---|
| Composition | Polyamide 6 | parts by mass | 95 | 95 | 95 | 95 |
| | Polyamide 11 | parts by mass | 5 | - | - | - |
| | Polyamide 410 | parts by mass | - | 5 | - | - |
| | Polyamide 610 | parts by mass | - | - | 5 | - |
| | Polyamide 1010 | parts by mass | - | - | - | 5 |
| | Fine particle | parts by mass | 0.45 | 0.45 | 0.45 | 0.45 |
| | Fatty acid amide | parts by mass | 0.15 | 0.15 | 0.15 | 0.15 |
| Inner pipe | | - | Without inner pipe | Without inner pipe | Without inner pipe | Without inner pipe |
| Stretching temperature in MD | | °C | 80 | 80 | 80 | 80 |
| Stretching ratio in MD | | times | 3.0 | 3.2 | 3.2 | 3.2 |
| Stretching temperature in TD | | °C | 130 | 130 | 130 | 130 |
| Stretching ratio in TD | | times | 3.3 | 4.0 | 4.0 | 4.0 |
| Heat setting temperature in TD | | °C | 210 | 218 | 218 | 218 |
| Relaxing temperature in TD | | °C | 210 | 218 | 218 | 218 |
| Relaxing rate in TD | | % | 7 | 7 | 7 | 7 |
| Thickness | | μm | 15 | 15 | 16 | 15 |
| Thickness accuracy | MD direction | % | 35 | 37 | 37 | 37 |
| | TD direction | % | 17 | 18 | 18 | 17 |
| Degree of biomass | Average value (Xave) | % | 4.7 | 4.5 | 4.7 | 4.6 |
| | Maximum value (Xmax) | % | 5.3 | 6.2 | 6.3 | 5.4 |
| | Minimum value (Xmin) | % | 4.1 | 4.1 | 4.0 | 4.2 |
| | Variability | % | 25 | 24 | 28 | 26 |

(continued)

| | | | Comparative Example 6 | Comparative Example 7 | Comparative Example 8 | Comparative Example 9 |
|---|---|---|---|---|---|---|
| Heat shrinkage rate | MD direction | % | 0.9 | 1.2 | 1.3 | 1.4 |
| | TD direction | % | 0.9 | 1.4 | 1.5 | 1.4 |

As shown in Table 1, the biaxially stretched polyamide film rolls of the Examples were able to achieve reduced variation in degrees of biomass measured by radiocarbon $^{14}$C in the MD direction by using an inner pipe for supplying the raw materials.

As shown in Table 2, Comparative Examples did not use an inner pipe for supplying the raw materials, leading to significant fluctuations in the ratio of raw materials in the MD direction due to raw materials segregation. Consequently, there was a greater variation in degrees of biomass measured by radiocarbon $^{14}$C in the MD direction.

EXPLANATION OF LETTERS OR NUMERALS

1: Hopper

2: Extruder

3: Inner pipe

4: Outlet of inner pipe

5: Raw material resin supply port

**Claims**

1.  A biaxially stretched polyamide film roll comprising:

    a biaxially stretched polyamide film containing 70% by mass to 99% by mass of polyamide 6 resin; and
    1% by mass to 30% by mass of a polyamide resin in which at least a part of a raw material is derived from biomass,
    wherein the film roll has a winding length of from 1,000 m to 60,000 m, a width of from 400 mm to 3,000 mm, and
    variability in a degree of biomass represented by the following Equation (1) of 15% or less:

    $$\text{Equation (1): variability in a degree of biomass (\%)} = \{(X_{max} - X_{min})/X_{ave}\} \times 100$$

    wherein $X_{max}$ represents a maximum value, $X_{min}$ represents a minimum value, and $X_{ave}$ represents an average value of a degree of biomass based on a radiocarbon $^{14}$C measurement of a biaxially stretched polyamide film sample taken from a surface to a core of the film roll at an interval of 1000 m in an MD direction.

2.  The biaxially stretched polyamide film roll according to claim 1, wherein the film roll has the degree of biomass of from 1% to 30%.

3.  The biaxially stretched polyamide film roll according to claim 1 or 2, wherein the polyamide resin in which at least a part of a raw material is derived from biomass is at least one polyamide resin selected from the group consisting of polyamide 11, polyamide 410, polyamide 610, and polyamide 1010.

4.  The biaxially stretched polyamide film roll according to any one of claims 1 to 3, wherein the film roll has a thickness accuracy of 30% or less in both the MD direction and a TD direction of the film roll.

5. A laminated film roll comprising a sealant film and the biaxially stretched polyamide film roll according to any one of claims 1 to 4, wherein the sealant film is laminated on the biaxially stretched polyamide film of the film roll.

6. A method for producing a biaxially stretched polyamide film roll, the method comprising:

feeding a raw material resin to an extruder and mixing the raw material, melt-extruding the mixed raw material resin from the extruder into a sheet shape, and cooling the sheet on a cast drum to form an unstretched sheet;
stretching the unstretched sheet in an MD direction and a TD direction; and
heat setting the stretched sheet,
wherein a raw material resin chip of polyamide 6 is supplied to a first hopper, a raw material resin chip of a polyamide in which at least a part of a raw material is derived from biomass is supplied to a second hopper, and the raw material resin chip fed from the first hopper and the raw material resin chip fed from the second hopper are mixed directly above an extruder, and then the resulting raw material resin is melt-extruded from the extruder.

7. The method for producing the biaxially stretched polyamide film roll according to claim 6, the method further comprising:
supplying the raw material resin chip of the second hopper through plumbing disposed inside of the first hopper and having an outlet directly above the extruder, and
mixing the raw material resin chip of the first hopper and the raw material resin chip of the second hopper.

[Fig.1]

## INTERNATIONAL SEARCH REPORT

International application No.

**PCT/JP2022/046839**

**A. CLASSIFICATION OF SUBJECT MATTER**

***B29C 48/285***(2019.01)i; ***B29B 7/24***(2006.01)i; ***B29C 31/10***(2006.01)i; ***B29C 48/08***(2019.01)i; ***B29C 48/305***(2019.01)i; ***B29C 48/88***(2019.01)i; ***B29C 55/12***(2006.01)i; ***C08J 5/18***(2006.01)i; ***C08L 77/02***(2006.01)i; *B29K 77/00*(2006.01)n; *B29L 7/00*(2006.01)n

FI: B29C48/285; B29B7/24; B29C31/10; B29C48/08; B29C48/305; B29C48/88; B29C55/12 ZAB; C08J5/18 CFG; C08L77/02; B29K77:00; B29L7:00

According to International Patent Classification (IPC) or to both national classification and IPC

**B. FIELDS SEARCHED**

Minimum documentation searched (classification system followed by classification symbols)

B29C48/00-48/96; B29B7/00-7/94; B29C31/04-31/10; B29C55/00-55/30; C08J5/18; C08L77/00-77/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/170714 A1 (TOYOBO CO., LTD.) 27 August 2020 (2020-08-27) paragraphs [0018], [0083], [0084], table 2 | 1-7 |
| Y | JP 2016-120721 A (TOYOBO CO., LTD.) 07 July 2016 (2016-07-07) paragraph [0105] | 1-7 |
| Y | JP 2010-155455 A (TOYOBO CO., LTD.) 15 July 2010 (2010-07-15) paragraphs [0062], [0087]-[0095] | 1-7 |
| Y | WO 2020/203106 A1 (TOYOBO CO., LTD.) 08 October 2020 (2020-10-08) paragraphs [0010], [0015], [0050] | 1-7 |
| Y | WO 2018/062145 A1 (TOYOBO CO., LTD.) 05 April 2018 (2018-04-05) paragraphs [0006], [0010], [0060] | 1-7 |
| A | JP 8-47972 A (UNITIKA LTD.) 20 February 1996 (1996-02-20) entire text, all drawings | 1-7 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 February 2023** | **14 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/046839**

| Patent document cited in search report | | | Publication date (day/month/year) | Patent family member(s) | | | Publication date (day/month/year) |
|---|---|---|---|---|---|---|---|
| WO | 2020/170714 | A1 | 27 August 2020 | US 2022/0135752 A1 paragraphs [0052], [0195]-[0202], table 2 EP 3928979 A1 CN 113439026 A KR 10-2021-0132085 A | | | |
| JP | 2016-120721 | A | 07 July 2016 | US 2013/0323485 A1 paragraph [0184] EP 2682252 A1 CN 103402737 A KR 10-2014-0007884 A KR 10-2018-0135989 A WO 2012/117884 A1 | | | |
| JP | 2010-155455 | A | 15 July 2010 | US 2011/0236635 A1 paragraphs [0074], [0183]-[0210] US 2015/0064485 A1 WO 2010/064616 A1 EP 2354179 A1 EP 2615129 A2 CN 102239204 A KR 10-2011-0101178 A | | | |
| WO | 2020/203106 | A1 | 08 October 2020 | (Family: none) | | | |
| WO | 2018/062145 | A1 | 05 April 2018 | US 2019/0210262 A1 paragraphs [0008], [0046], [0113] EP 3520997 A1 KR 10-2019-0060987 A | | | |
| JP | 8-47972 | A | 20 February 1996 | US 5612105 A entire text, all drawings EP 0685510 A1 | | | |

Form PCT/ISA/210 (patent family annex) (January 2015)

**REFERENCES CITED IN THE DESCRIPTION**

**Patent documents cited in the description**

- WO 2020170714 A